# EUROPEAN PATENT SPECIFICATION

(11) **EP 2 738 971 B1**
(45) Date of publication and mention of the grant of the patent: **21.09.2016**
(21) Application number: 12827400.8
(22) Date of filing: 19.07.2012
(51) Int. Cl.: H04J 3/06, H04L 7/00, H04L 29/06

(54) **METHOD AND DEVICE FOR CLOCK SYNCHRONIZATION**
VERFAHREN UND VORRICHTUNG ZUR TAKTSYNCHRONISIERUNG
PROCÉDÉ ET DISPOSITIF DE SYNCHRONISATION D'HORLOGES

(30) Priority: 01.09.2011 CN 201110256492
(43) Date of publication of application: 04.06.2014
(73) Proprietor: ZTE Corporation, Shenzhen, Guangdong 518057 (CN)
(72) Inventor: WANG, Bin, Shenzhen Guangdong 518057 (CN); XIA, Liang, Shenzhen Guangdong 518057 (CN)
(74) Representative: Johnson, Richard Alan
(86) International application number: PCT/CN2012/078883
(87) International publication number: WO 2013/029441

(56) References cited:
- CN-A- 101 686 093
- CN-A- 102 123 024
- CN-A- 102 291 232
- US-A1- 2010 098 111
- US-A1- 2010 150 288
- US-A1- 2010 254 225
- "Precision time protocol telecom profile for frequency synchronization; G.8265.1/Y.1365.1 (10/10)", ITU-T STANDARD, INTERNATIONAL TELECOMMUNICATION UNION, GENEVA ; CH, no. G.8265.1/Y.1365.1 (10/10), 7 October 2010 (2010-10-07), pages 1-30, XP017467816, [retrieved on 2011-07-20]

## Description

### Technical Field

The present document relates to the 1588 clock synchronization protocol, and in particular, to a method and apparatus for clock synchronization.

### Background of the Related Art

Precision Time Protocol (PTP) IEEESTD1588 is one of the important technologies in the field of time and frequency synchronization control. The 1588 protocol specifies that the slave clock device simultaneously records a number of effective clock source devices as candidate clock sources. The best preferable clock source is selected from the candidate clock sources by the Best Master Clock Algorithm (BMC) as the master clock source of the current system, and the slave clock device performs protocol interaction with the preferable clock source, calculates time and frequency offsets and corrects the time and frequency of the slave clock device. When the preferable source fails, the slave clock device is switched to a secondary best source in the candidate clock sources which is calculated according to the BMC algorithm, starts to perform protocol interaction again, and performs calculation and synchronization.

There exist the following problems in the actual network applications: when the slave clock device follows the preferable clock source in accordance with the protocol, it needs to accumulate the change data of the PDV (Packet Delay Vibration) for a period of time, so as to calculate and filter out the PDV of the current link correctly. Due to the difference between links, there are significant difference of the PDV between various candidate clock sources and the slave clock device. Once the link switching occurs, the change data of the PDV which is accumulated originally is not suitable to the new link, the PDV which is calculated at this time is incorrect, and it needs to accumulate change data of the PDV again to calculate the PDV. It takes more time to enable the slave clock device to follow the new clock source correctly and calculate the accurate PDV, and thereby calculate the time and frequency offsets. When different filtering modes are used and the change conditions of the PDV are different, the time to accumulate the change data of the PDV is even as long as several minutes to tens of minutes.

From the time when the link switching occurs to the time when the clock source is relocked, the vibration of the time and frequency output by the slave clock device has a large offset from that in the lock condition, and the synchronization performance of the frequency and time is worse.

Relevant technologies are also known from "Precision time protocol telecom profile for frequency synchronization; G.8265.1/Y.1365.1 (10/10)", ITU-T STANDARD, INTERNATIONAL TELECOMMUNICATION UNION, GENEVA;CH, no. G.8265.1/Y.1365.1 (10/10), 7 October 2010, pages 1-30, XP017467816 and US 2010/254225 A1 (SCHWEITZER III EDMUND O [US] ET AL) 7 October 2010.

### Summary of the Invention

The technical problem to be solved by the embodiments of the present document is to provide a method and apparatus for clock synchronization, which can track a new candidate clock source immediately and accurately when the current master clock source fails.

The features of the method and apparatus according to the present document are defined in the independent claims.

In conclusion, in the embodiments of the present document, the candidate clock source device is immediately locked as soon as it is discovered rather than after the switching, so that the multi-path candidate clock source devices are locked simultaneously by the slave clock device and only the time and frequency offsets from the preferable clock source are used to correct the time and frequency of the present device, and when the switching of the clock source device occurs, the slave clock device is switched to the currently locked candidate clock source device to the greatest extent. The embodiments of the present document not only shorten the switching time, but also can ensure the synchronization accuracy of the time and frequency during switching to the maximum extent, accelerate the switching speed of the clock source device and enhance switching performance.

### Brief Description of Drawings

Fig. 1 is a diagram of synchronization of master and slave clock devices in the related art;
Fig. 2 is a diagram of synchronization of master and slave clock devices according to a preferable embodiment of the present document;
Fig. 3 is a flow of adding a candidate clock source in a method for clock synchronization according to a preferable embodiment of the present document;
Fig. 4 is a flow of switching when a master clock source fails in a method for clock synchronization according to a preferable embodiment of the present document; and
Fig.5 is a diagram of architecture of an apparatus for clock synchronization according to a preferable embodiment of the present document.

### Preferred Embodiments of the Present Invention

In the present embodiment, a slave clock device simultaneously performs protocol message interaction with multiple candidate clock source devices, and at the same time calculates Packet Delay Variation (PDV) of links corresponding to the multiple candidate clock source devices to calculate time and frequency offsets from the multiple candidate clock source devices. When switching of the clock source occurs, time and frequency offsets of a new link are used to correct the time and frequency of the slave clock device.

A method for clock synchronization according to the present embodiment comprises the following steps.

In step one, when a slave clock device discovers a new candidate clock source device, the slave clock device starts to establish and maintain a link with the candidate lock source device, performs protocol communication, calculates the PDV and further calculates time and frequency offsets from the candidate clock source device, thus establishing links with multiple candidate clock source devices and calculating the time and frequency offsets to clock the multiple candidate clock sources;
in step two, when the slave clock device has not locked any clock source device currently, the slave clock device selects a candidate clock source device with the highest priority as the master clock source, and corrects the time and frequency of its own using the time and frequency offsets from the master clock source;
in step three, when the slave clock device has locked one candidate clock source device and the priority of the new candidate clock source device is lower than that of the current master clock source, the time and frequency offsets of the new clock source device are calculated as well, and the switching is not performed;
in step four, when the slave clock device has locked one candidate clock source device and the new candidate clock source device has a higher priority, the user can select to switch immediately, or does not switch temporarily but performs switching after the new candidate clock source device with a higher priority is clocked;
in step five, when the current master clock source device fails, if a candidate clock source with second highest priority has been locked, the slave clock device will immediately be switched to the secondary preferable clock source device, and correct the time and frequency of its own using the time and frequency offsets from the clock source device;
in step six, when the current master clock source device fails, if the candidate clock source with second highest priority is not locked, it can be selected whether to switch to the unlocked clock source device with second highest priority or to a candidate clock source device with the highest priority from the currently locked candidate clock source devices according to the setting of the user;
Of course, the user can also be allowed to immediately perform switching of the clock source device through a manual operation at any time or specifies the master clock source directly without considering the locking state.

The process of implementing the method for clock synchronization according to the present embodiment on one network with two candidate clock sources will be described below with reference to the accompanying drawings.

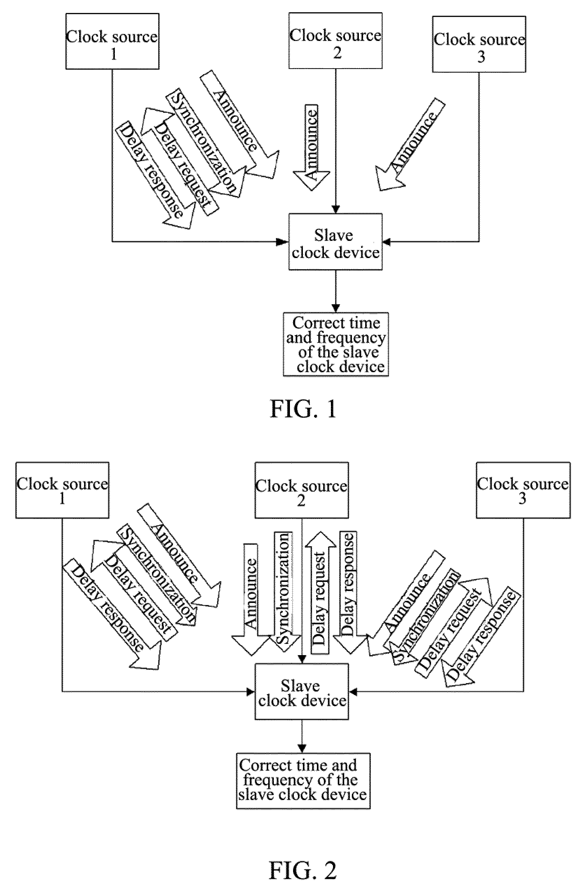

As shown in Fig. 1, in the existing master and candidate clock source networks, the 1588 slave clock device discovers 1588 clock sources 1, 2 and 3 at the same time. The 1588 slave clock device decides which clock source to be used as the master clock source according to the BMC algorithm, and other clock source devices become the candidate clock sources automatically. If it is assumed that the 1588 clock source 1 has the highest priority, only source 1 is locked after the slave clock device selects source 1 as the master clock source. When source 1 fails, a candidate source with the highest priority in the candidate sources is locked. The process of relocking needs to consume a period of time and the performance is poor in a short time of period. Wherein, the messages related to the interaction comprise protocol messages such as announce, Sync, Delay_req, Delay_resp etc.

As shown in Fig. 2, in the preferable embodiments of the present document, the slave clock device locks clock source 1, 2 and 3 at the same time, but corrects the time and frequency of its own only using time and frequency offsets from source 1. When switching occurs, for example, switching to source 2, it is changed to output the time and frequency offsets calculated for a link of source 2 and there is no process of relocking.

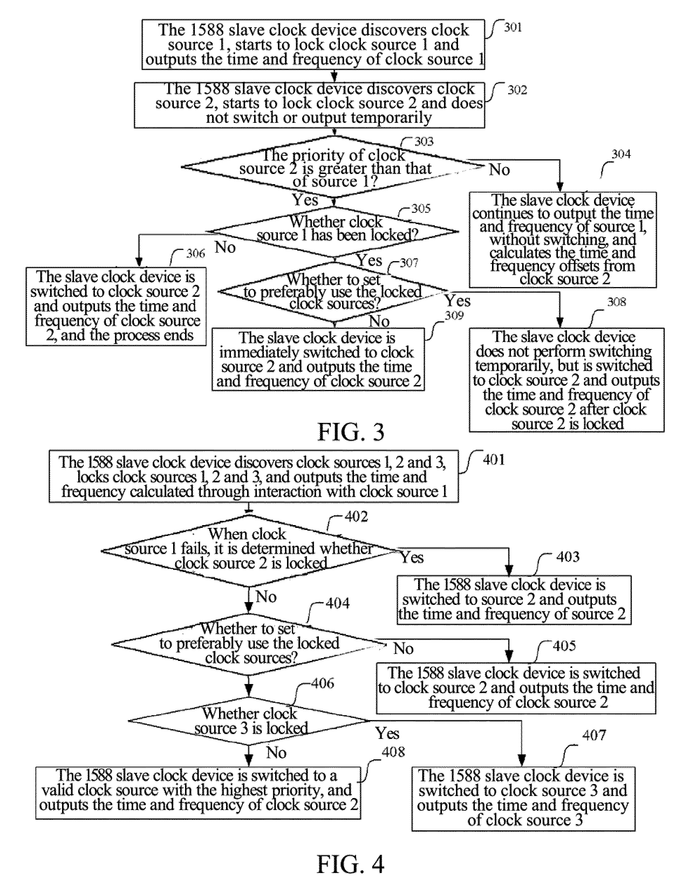

As shown in Fig. 3, in the preferable embodiments of the present document, a new clock source is added in the network according to the following steps.

In step 301, the 1588 slave clock device discovers clock source 1, starts to lock clock source 1 and outputs the time and frequency of clock source 1;
in step 302, the 1588 slave clock device discovers clock source 2, starts to lock clock source 2 and does not switch or output temporarily;
in step 303, the 1588 clock source device determines whether the priority of clock source 2 is larger than the priority of source 1, and if not, perform step 304; and if so, perform step 305;
in step 304, the slave clock device continues to output the time and frequency of source 1, does not switch, and calculates the time and frequency offsets from clock source 2, and the process ends;
in step 305, the slave clock device determines whether clock source 1 has been locked, and if not, perform step 306; if so, perform step 307;
in step 306, the slave clock device is switched to clock source 2 and outputs the time and frequency of clock source 2, and the process ends;
in step 307, the slave clock device determines whether the user sets to preferably use the locked clock sources, and if so, perform step 308; if not, perform step 309;
in step 308, the slave clock device does not perform switching temporarily, but is switched to clock source 2 and outputs the time and frequency of clock source 2 after clock source 2 is locked;
in step 309, the slave clock device is immediately switched to clock source 2 and outputs the time and frequency of a link of clock source 2.

The source is selected according to the above steps, and when clock source 2 is added in the network, the 1588 slave clock device can perform adding and switching operations correctly.

As shown in Fig. 4, in the preferable embodiments of the present document, when the original master clock source in the network fails, the following steps are performed.

In step 401, the 1588 slave clock device discovers clock sources 1, 2 and 3, and locks clock sources 1, 2 and 3, and assume the priorities (1>2>3), and at this time, the slave clock device outputs the time and frequency calculated by interaction with clock source 1;
in step 402, the 1588 slave clock device discovers that clock source 1 fails, and then determines whether clock source 2 is locked;
in step 403, if clock source 2 has been locked, the 1588 slave clock device is switched to source 2 and outputs the time and frequency of source 2;
in step 404, if clock source 2 is not locked, it is determined whether the user sets to preferably use the locked clock sources;
in step 405, if the user does not set to preferably use the locked clock sources, the 1588 slave clock device is switched to clock source 2 and outputs the time and frequency of clock source 2;
in step 406, if the user sets to preferably use the locked clock sources, it is determined whether clock source 3 is locked;
in step 407, if clock source 3 has been clocked, the 1588 slave clock device is switched to clock source 3 and outputs the time and frequency of clock source 3;
In step 408, if clock source 3 is not clocked, there is no other clocked clock sources at this time, and the 1588 slave clock device is switched to an effective clock source with the highest priority, i.e., outputting the time and frequency of clock source 2.

The source is selected according to the above steps, and when the preferable clock source 1 in the network fails, the 1588 slave clock device can perform the failure switching operation correctly.

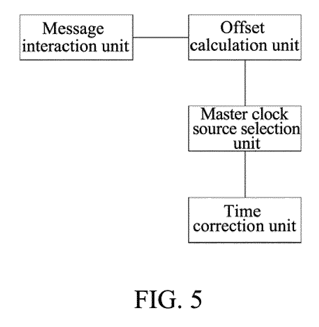

Fig. 5 is an apparatus for clock synchronization according to a preferable embodiment of the present document, comprising: a message interaction unit, an offset calculation unit, a master clock source selection unit and a time correction unit, wherein,
the message interaction unit is configured to simultaneously perform protocol message interaction with multiple candidate clock source devices;
the offset calculation unit is configured to respectively calculate time and frequency offsets from each candidate clock source device according to the protocol message interaction between the message interaction unit and the multiple candidate clock source devices and lock the multiple candidate clock source devices;
the master clock source selection unit is configured to select a master clock source from the multiple candidate clock source devices; and
the time correction unit is configured to correct the time and frequency using the time and frequency offsets from the master clock source.

When the offset calculation unit does not lock any one of the multiple clock source devices, the master clock source selection unit selects a clock source device with a highest priority from the multiple clock source devices as the master clock source.

When the offset calculation unit has locked one clock source device and discovers that there is a candidate clock source device with a higher priority, the master clock source selection unit selects to use the candidate clock source device with a higher priority as the master clock source; or uses the candidate clock source device with a higher priority as the master clock source after the candidate clock source device with a higher priority is locked.

When the offset calculation unit has locked one clock source device and discovers a candidate clock source device with a lower priority than that of the master clock source, the master clock source selection unit calculates time and frequency offsets from the discovered clock source device and locks the discovered clock source device.

When discovering that the master clock source fails, the master clock source selection unit selects a candidate clock source device with second highest priority from the multiple candidate clock source devices, and when the candidate clock source device with second highest priority is not locked, selects a candidate clock source device with a highest priority from the locked candidate clock source devices as the master clock source; and when the candidate clock source device with second highest priority has been locked, uses the candidate clock source device with second highest priority as the master clock source; or uses the candidate clock source device with second highest priority as the master clock source.

Obviously, those skilled in the art should understand that each module or each step of the aforementioned present document can be implemented with general computing apparatuses, and can be integrated in a single computing apparatus, or distributed onto a network consisting of a plurality of computing apparatuses; alternatively, they can be implemented with program codes executable by the computing apparatuses, and therefore, they can be stored in storage apparatuses to be executed by the computing apparatuses; in some cases, an order different from that here can be used to execute the shown or described steps; alternatively, they are respectively made into a plurality of integrated circuit modules; alternatively, it is implemented with making several modules or steps of them into a single integrated circuit module. Thus, the present document is not limited to any specific combinations of hardware and software.

The above description is only the preferred embodiments of the present document and is not intended to limit the present document. The scope of the document is to be determined by the appended claims.

### Industrial Applicability

The method and apparatus for clock synchronization provided in the embodiments of the present document immediately start to lock the candidate clock source device as soon as it is discovered, so that the multi-path candidate clock source devices are locked simultaneously by the slave clock device and only the time and frequency offsets from the preferable clock source are used to correct the time and frequency of the present device, and when the switching of the clock source device occurs, the slave clock device is switched to the currently locked candidate clock source device to the greatest extent, therefore, the switching time can be shorten, the synchronization accuracy of the time and frequency during switching can be ensured, the switching speed of the clock source device is accelerated and the switching performance is enhanced.

## Claims

1. A method for clock synchronization, comprising the following steps of:
when a slave clock device discovers multiple candidate clock source devices, the slave clock device respectively performing protocol message interaction with each candidate clock source device and calculating time and frequency offsets of the slave clock device from each candidate clock source device according to the protocol message interaction with each candidate clock source device, thereby performing a locking process of each candidate clock source device; and
the slave clock device selecting a master clock source from the multiple candidate clock source devices, and correcting time and frequency of the slave clock device by using the time and frequency offsets from the master clock source (301,302,401).

2. The method according to claim 1, wherein, the step of the slave clock device selecting a master clock source from the multiple candidate clock source devices comprises:
when the slave clock device does not complete the locking process of any one of the multiple candidate clock source devices, selecting a clock source device with highest priority from the multiple candidate clock source devices as the master clock source.

3. The method according to claim 1, wherein, the step of the slave clock device selecting a master clock source from the multiple candidate clock source devices comprises:
when the slave clock device has locked one candidate clock source device and discovers that there is a candidate clock source device with a higher priority, selecting the candidate clock source device with a higher priority as the master clock source; or using the candidate clock source device with a higher priority as the master clock source after the candidate clock source device with a higher priority is locked (303, 305, 306, 307, 308).

4. The method according to claim 1, wherein, the step of the slave clock device selecting a master clock source from the multiple candidate clock source devices comprises:
when the slave clock device has locked one candidate clock source device and discovers that there is a candidate clock source device with a lower priority than that of the master clock source, calculating time and frequency offsets of the slave clock device from the discovered candidate clock source device and performing the locking process of the discovered candidate clock source device.

5. The method according to claim 1, further comprising:
when the slave clock device discovers that the master clock source fails, selecting a candidate clock source device with second highest priority from the multiple candidate clock source devices, and when the candidate clock source device with second highest priority has been locked, using the candidate clock source device with second highest priority as the master clock source (402, 403).

6. The method according to claim 1, further comprising:
when the slave clock device discovers that the master clock source fails, selecting a candidate clock source device with second highest priority from the multiple candidate clock source devices, and when the slave clock device does not complete the locking process of the candidate clock source device with second highest priority (404), selecting a candidate clock source device with highest priority from the locked candidate clock source devices as the master clock source (406, 407); or using the candidate clock source device with second highest priority as the master clock source (405).

7. An apparatus for clock synchronization, comprising: a message interaction unit, an offset calculation unit, a master clock source selection unit and a time correction unit, wherein:
the message interaction unit is configured to respectively perform protocol message interaction with each candidate clock source device when discovering multiple candidate clock source devices;
the offset calculation unit is configured to respectively calculate time and frequency offsets from each candidate clock source device according to the protocol message interaction between the message interaction unit and each candidate clock source device, thereby performing a locking process of each candidate clock source device;
the master clock source selection unit is configured to select a master clock source from the multiple candidate clock source devices; and
the time correction unit is configured to correct time and frequency of a slave clock device by using the time and frequency offsets from the master clock source.

8. The apparatus according to claim 7, wherein,
when the offset calculation unit does not complete the locking process of any one of the multiple candidate clock source devices, the master clock source selection unit selects a clock source device with highest priority from the multiple candidate clock source devices as the master clock source.

9. The apparatus according to claim 7, wherein,
when the offset calculation unit has locked one candidate clock source device and discovers that there is a candidate clock source device with a higher priority, the master clock source selection unit selects the candidate clock source device with a higher priority as the master clock source; or uses the candidate clock source device with a higher priority as the master clock source after the candidate clock source device with a higher priority is locked.

10. The apparatus according to claim 7, wherein,
when the offset calculation unit has locked one candidate clock source device and discovers that there is a candidate clock source device with a lower priority than that of the master clock source, the master clock source selection unit calculates time and frequency offsets of the slave clock device from the discovered clock source device and performing the locking process of the discovered candidate clock source device.

11. The apparatus according to claim 7, further comprising:
when the master clock source is discovered to fail, the master clock source selection unit selects a candidate clock source device with second highest priority from the multiple candidate clock source devices, and when the candidate clock source device with second highest priority has not been completed its locking process, the master clock source selection unit selects a candidate clock source device with highest priority from the locked candidate clock source devices as the master clock source; and when the candidate clock source device with second highest priority has been completed its locking process, the master clock source selection unit uses the candidate clock source device with second highest priority as the master clock source;
or when the master clock source is discovered to fail, the master clock source selection unit selects a candidate clock source device with second highest priority from the multiple candidate clock source devices, and uses the candidate clock source device with second highest priority as the master clock source.

## Patentansprüche

1. Verfahren zur Taktsynchronisierung, umfassend die folgenden Schritte:
wenn eine Nebentaktvorrichtung mehrere Kandidaten-Taktquellenvorrichtungen entdeckt, Ausführen, durch die Nebentaktvorrichtung, jeweils einer Protokollnachrichten-Interaktion mit jeder Kandidaten-Taktquellenvorrichtung und Berechnen von Zeit- und Frequenz-Abweichungen der Nebentaktvorrichtung von jeder Kandidaten-Taktquellenvorrichtung gemäß der Protokollnachrichten-Interaktion mit jeder Kandidaten-Taktquellenvorrichtung, wodurch ein Verriegelungsvorgang von jeder Kandidaten-Taktquellenvorrichtung ausgeführt wird; und
Auswählen einer Haupttaktquelle aus den mehreren Kandidaten-Taktquellenvorrichtungen durch die Nebentaktvorrichtung, und Berichtigen von Zeit und Frequenz der Nebentaktvorrichtung unter Anwendung der Zeit- und Frequenz-Abweichungen von der Haupttaktquelle (301, 302, 401).

2. Verfahren gemäß Anspruch 1, worin der Schritt des Auswählens einer Haupttaktquelle aus den mehreren Kandidaten-Taktquellenvorrichtungen durch die Nebentaktvorrichtung Folgendes umfasst:
Auswählen einer Taktquellenvorrichtung mit höchster Priorität aus den mehreren Kandidaten-Taktquellenvorrichtungen als die Haupttaktquelle, wenn die Nebentaktquelle den Verriegelungsvorgang einer beliebigen der mehreren Kandidaten-Taktquellenvorrichtungen nicht abschließt.

3. Verfahren gemäß Anspruch 1, worin der Schritt des Auswählens einer Haupttaktquelle aus den mehreren Kandidaten-Taktquellenvorrichtungen durch die Nebentaktvorrichtung Folgendes umfasst:
wenn die Nebentaktvorrichtung eine Kandidaten-Taktquellenvorrichtung verriegelt hat und das Vorhandensein einer Kandidaten-Taktquellenvorrichtung mit einer höheren Priorität entdeckt, Auswählen der Kandidaten-Taktquellenvorrichtung mit einer höheren Priorität als die Haupttaktquelle; oder Verwenden der Kandidaten-Taktquellenvorrichtung mit einer höheren Priorität als die Haupttaktquelle, nachdem die Kandidaten-Taktquellenvorrichtung mit einer höheren Priorität verriegelt wird (303, 305, 306, 307, 308).

4. Verfahren gemäß Anspruch 1, worin der Schritt des Auswählens einer Haupttaktquelle aus den mehreren Kandidaten-Taktquellenvorrichtungen durch die Nebentaktvorrichtung Folgendes umfasst:
Berechnen von Zeit- und Frequenz-Abweichungen der Nebentaktvorrichtung von der entdeckten Kandidaten-Taktquellenvorrichtung und Ausführen des Verriegelungsvorgangs der entdeckten Kandidaten-Taktquellenvorrichtung, wenn die Nebentaktvorrichtung eine Kandidaten-Taktquellenvorrichtung verriegelt hat und das Vorhandensein einer Kandidaten-Taktquellenvorrichtung mit einer geringeren Priorität als diejenige der Haupttaktquelle entdeckt.

5. Verfahren gemäß Anspruch 1, ferner umfassend:
Auswählen einer Kandidaten-Taktquellenvorrichtung mit zweit-höchster Priorität aus den mehreren Kandidaten-Taktquellenvorrichtungen, wenn die Nebentaktvorrichtung entdeckt, dass die Haupttaktquelle versagt, und, wenn die Kandidaten-Taktquellenvorrichtung mit zweit-höchster Priorität verriegelt worden ist, Verwenden der Kandidaten-Taktquellenvorrichtung mit zweit-höchster Priorität als die Haupttaktquelle (402, 403).

6. Verfahren gemäß Anspruch 1, ferner umfassend:
Auswählen einer Kandidaten-Taktquellenvorrichtung mit zweit-höchster Priorität aus den mehreren Kandidaten-Taktquellenvorrichtungen, wenn die Nebentaktvorrichtung entdeckt, dass die Haupttaktquelle versagt, und Auswählen einer Kandidaten-Taktquellenvorrichtung mit höchster Priorität aus den verriegelten Kandidaten-Taktquellenvorrichtungen als die Haupttaktquelle (406, 407); oder Verwenden der Kandidaten-Taktquellenvorrichtung mit zweit-höchster Priorität als die Haupttaktquelle (405), wenn die Nebentaktvorrichtung den Verriegelungsvorgang der Kandidaten-Taktquellenvorrichtung mit zweit-höchster Priorität (404) nicht abschließt.

7. Gerät zur Taktsynchronisierung, umfassend: eine Nachrichten-Interaktions-Einheit, eine Abweichungsberechnungseinheit, eine Haupttaktquellenauswahleinheit und eine Zeitberichtigungseinheit, worin:
die Nachrichten-Interaktions-Einheit konfiguriert ist, jeweils eine Protokollnachrichten-Interaktion mit jeder Kandidaten-Taktquellenvorrichtung auszuführen, wenn mehrere Kandidaten-Taktquellenvorrichtungen entdeckt werden;
die Abweichungsberechnungseinheit konfiguriert ist, jeweils Zeit- und Frequenz-Abweichungen von jeder Kandidaten-Taktquellenvorrichtung gemäß der Protokollnachrichten-Interaktion zwischen der Nachrichten-Interaktions-Einheit und jeder Kandidaten-Taktquellenvorrichtung zu berechnen, wodurch ein Verriegelungsvorgang von jeder Kandidaten-Taktquellenvorrichtung ausgeführt wird;
die Haupttaktquellenauswahleinheit konfiguriert ist, eine Haupttaktquelle aus den mehreren Kandidaten-Taktquellenvorrichtungen auszuwählen; und
die Zeitberichtigungseinheit konfiguriert ist, Zeit und Frequenz einer Nebentaktvorrichtung unter Anwendung der Zeit- und Frequenz-Abweichungen von der Haupttaktquelle zu berichtigen.

8. Gerät gemäß Anspruch 7, worin
die Haupttaktquellenauswahleinheit eine Taktquellenvorrichtung mit höchster Priorität aus den mehreren Kandidaten-Taktquellenvorrichtungen als die Haupttaktquelle auswählt, wenn die Abweichungsberechnungseinheit den Verriegelungsvorgang einer beliebigen der mehreren Kandidaten-Taktquellenvorrichtungen nicht abschließt.

9. Gerät gemäß Anspruch 7, worin
die Haupttaktquellenauswahleinheit die Kandidaten-Taktquellenvorrichtung mit einer höheren Priorität als die Haupttaktquelle auswählt, wenn die Abweichungsberechnungseinheit eine Kandidaten-Taktquellenvorrichtung verriegelt hat und das Vorhandensein einer Kandidaten-Taktquellenvorrichtung mit einer höheren Priorität entdeckt; oder die Kandidaten-Taktquellenvorrichtung mit einer höheren Priorität als die Haupttaktquelle verwendet, nachdem die Kandidaten-Taktquellenvorrichtung mit einer höheren Priorität verriegelt wird.

10. Gerät gemäß Anspruch 7, worin
die Haupttaktquellenauswahleinheit Zeit- und Frequenz-Abweichungen der Nebentaktvorrichtung der entdeckten Taktquellenvorrichtung berechnet und den Verriegelungsvorgang der entdeckten Kandidaten-Taktquellenvorrichtung ausführt, wenn die Abweichungsberechnungseinheit eine Kandidaten-Taktquellenvorrichtung verriegelt hat und das Vorhandensein einer Kandidaten-Taktquellenvorrichtung mit einer geringeren Priorität als diejenige der Haupttaktquelle entdeckt.

11. Gerät gemäß Anspruch 7, ferner umfassend:
Auswählen einer Kandidaten-Taktquellenvorrichtung mit zweit-höchster Priorität aus den mehreren Kandidaten-Taktquellenvorrichtungen durch die Haupttaktquellenauswahleinheit, wenn die Haupttaktquelle sich als versagend herausstellt, und Auswählen einer Kandidaten-Taktquellenvorrichtung mit höchster Priorität aus den verriegelten Kandidaten-Taktquellenvorrichtungen als die Haupttaktquelle durch die Haupttaktquellenauswahleinheit, wenn die Kandidaten-Taktquellenvorrichtung mit zweit-höchster Priorität ihren Verriegelungsvorgang nicht abgeschlossen hat; und Verwenden der Kandidaten-Taktquellenvorrichtung mit zweit-höchster Priorität als die Haupttaktquelle durch die Haupttaktquellenauswahleinheit, wenn die Kandidaten-Taktquellenvorrichtung mit zweit-höchster Priorität ihren Verriegelungsvorgang abgeschlossen hat;
oder Auswählen einer Kandidaten-Taktquellenvorrichtung mit zweit-höchster Priorität aus den mehreren Kandidaten-Taktquellenvorrichtungen durch die Haupttaktquellenauswahleinheit, und Verwenden der Kandidaten-Taktquellenvorrichtung mit zweit-höchster Priorität als die Haupttaktquelle, wenn die Haupttaktquelle sich als versagend herausstellt.

## Revendications

1. Procédé de synchronisation d'horloge, comprenant les étapes suivantes :
lorsqu'un dispositif d'horloge esclave découvre de multiples dispositifs de source d'horloge candidats, le dispositif d'horloge esclave effectue respectivement une interaction de messages de protocole avec chaque dispositif de source d'horloge candidat et calcule des décalages de temps et de fréquence du dispositif d'horloge esclave par rapport à chaque dispositif de source d'horloge candidat en fonction de l'interaction de messages de protocole avec chaque dispositif de source d'horloge candidat, effectuant de ce fait un traitement de verrouillage de chaque dispositif de source d'horloge candidat ; et
le dispositif d'horloge esclave sélectionne une source d'horloge maître parmi les multiples dispositifs de source d'horloge candidats, et corrige un temps et une fréquence du dispositif d'horloge esclave en utilisant les décalages de temps et de fréquence par rapport à la source d'horloge maître (301, 302, 401).

2. Procédé selon la revendication 1, dans lequel, l'étape de sélection par le dispositif d'horloge esclave d'une source d'horloge maître parmi les multiples dispositifs de source d'horloge candidats comprend :
lorsque le dispositif d'horloge esclave n'achève pas le traitement de verrouillage de l'un quelconque des multiples dispositifs de source d'horloge candidats, la sélection d'un dispositif de source d'horloge avec la priorité la plus élevée parmi les multiples dispositifs de source d'horloge candidats en tant que source d'horloge maître.

3. Procédé selon la revendication 1, dans lequel l'étape de sélection par le dispositif d'horloge esclave d'une source d'horloge maître parmi les multiples dispositifs de source d'horloge candidats comprend :
lorsque le dispositif d'horloge esclave a verrouillé un dispositif de source d'horloge candidat et découvre qu'il existe un dispositif de source d'horloge candidat avec une priorité plus élevée, la sélection du dispositif de source d'horloge candidat avec une priorité plus élevée en tant que source d'horloge maître ; ou l'utilisation du dispositif de source d'horloge candidat avec une priorité plus élevée en tant que source d'horloge maître après que le dispositif de source d'horloge candidat avec une priorité plus élevée a été verrouillé (303, 305, 306, 307, 308).

4. Procédé selon la revendication 1, dans lequel l'étape de sélection par le dispositif d'horloge esclave d'une source d'horloge maître parmi les multiples dispositifs de source d'horloge candidats comprend :
lorsque le dispositif d'horloge esclave a verrouillé un dispositif de source d'horloge candidat et découvre qu'il existe un dispositif de source d'horloge candidat avec une priorité inférieure à celle de la source d'horloge maître, le calcul des décalages de temps et de fréquence du dispositif d'horloge esclave par rapport au dispositif de source d'horloge candidat découvert et l'exécution du traitement de verrouillage du dispositif de source d'horloge candidat découvert.

5. Procédé selon la revendication 1, comprenant en outre :
lorsque le dispositif d'horloge esclave découvre que la source d'horloge maître est défaillante, la sélection d'un dispositif de source d'horloge candidat avec la deuxième priorité la plus élevée parmi les multiples dispositifs de source d'horloge candidats, et lorsque le dispositif de source d'horloge candidat avec la deuxième priorité la plus élevée a été verrouillé, l'utilisation du dispositif de source d'horloge candidat avec la deuxième priorité la plus élevée en tant que source d'horloge maître (402, 403).

6. Procédé selon la revendication 1, comprenant en outre :
lorsque le dispositif d'horloge esclave découvre que la source d'horloge maître est défaillante, la sélection d'un dispositif de source d'horloge candidat avec la deuxième priorité la plus élevée parmi les multiples dispositifs de source d'horloge candidats, et lorsque le dispositif d'horloge esclave n'achève pas le traitement de verrouillage du dispositif de source d'horloge candidat avec la deuxième priorité la plus élevée (404), la sélection d'un dispositif de source d'horloge candidat avec la priorité la plus élevée parmi les dispositifs de source d'horloge candidats verrouillés en tant que source d'horloge maître (406, 407) ; ou l'utilisation du dispositif de source d'horloge candidat avec la deuxième priorité la plus élevée en tant que source d'horloge maître (405) .

7. Appareil de synchronisation d'horloge, comprenant : une unité d'interaction de messages, une unité de calcul de décalage, une unité de sélection de source d'horloge maître et une unité de correction de temps, dans lequel :
l'unité d'interaction de messages est configurée pour effectuer respectivement une interaction de messages de protocole avec chaque dispositif de source d'horloge candidat lors de la découverte de multiples dispositifs de source d'horloge candidats ;
l'unité de calcul de décalage est configurée pour calculer respectivement les décalages de temps et de fréquence par rapport à chaque dispositif de source d'horloge candidat conformément à l'interaction de messages de protocole entre l'unité d'interaction de messages et chaque dispositif de source d'horloge candidat, effectuant de ce fait un traitement de verrouillage de chaque dispositif de source d'horloge candidat ;
l'unité de sélection de source d'horloge maître est configurée pour sélectionner une source d'horloge maître parmi les multiples dispositifs de source d'horloge candidats ; et
l'unité de correction de temps est configurée pour corriger un temps et une fréquence d'un dispositif d'horloge esclave en utilisant les décalages de temps et de fréquence par rapport à la source d'horloge maître.

8. Appareil selon la revendication 7, dans lequel lorsque l'unité de calcul de décalage n'achève pas le traitement de verrouillage de l'un quelconque des multiples dispositifs de source d'horloge candidats, l'unité de sélection de source d'horloge maître sélectionne un dispositif de source d'horloge avec la priorité la plus élevée parmi les multiples dispositifs de source d'horloge candidats en tant que source d'horloge maître.

9. Appareil selon la revendication 7, dans lequel lorsque l'unité de calcul de décalage a verrouillé un dispositif de source d'horloge candidat et découvre qu'il existe un dispositif de source d'horloge candidat avec une priorité plus élevée, l'unité de sélection de source d'horloge maître sélectionne le dispositif de source d'horloge candidat avec une priorité plus élevée en tant que source d'horloge maître ; ou utilise le dispositif de source d'horloge candidat avec une priorité plus élevée en tant que source d'horloge maître après que le dispositif de source d'horloge candidat avec une priorité plus élevée a été verrouillé.

10. Appareil selon la revendication 7, dans lequel lorsque l'unité de calcul de décalage a verrouillé un dispositif de source d'horloge candidat et découvre qu'il existe un dispositif de source d'horloge candidat avec une priorité inférieure à celle de la source d'horloge maître, l'unité de sélection de source d'horloge maître calcule les décalages de temps et de fréquence du dispositif d'horloge esclave par rapport au dispositif de source d'horloge découvert et effectue le traitement de verrouillage du dispositif de source d'horloge candidat découvert.

11. Appareil selon la revendication 7, comprenant en outre :
lorsqu'il est découvert que la source d'horloge maître est défaillante, l'unité de sélection de source d'horloge maître sélectionne un dispositif de source d'horloge candidat avec la deuxième priorité la plus élevée parmi les multiples dispositifs de source d'horloge candidats, et lorsque le dispositif de source d'horloge candidat avec la deuxième priorité la plus élevée n'a pas achevé son traitement de verrouillage, l'unité de sélection de source d'horloge maître sélectionne un dispositif de source d'horloge candidat avec la priorité la plus élevée parmi les dispositifs de source d'horloge candidats verrouillés en tant que source d'horloge maître ; et lorsque le dispositif de source d'horloge candidat avec la deuxième priorité la plus élevée a achevé son traitement de verrouillage, l'unité de sélection de source d'horloge maître utilise le dispositif de source d'horloge candidat avec la deuxième priorité la plus élevée en tant que source d'horloge maître ;
ou lorsqu'il est découvert que la source d'horloge maître est défaillante, l'unité de sélection de source d'horloge maître sélectionne un dispositif de source d'horloge candidat avec la deuxième priorité la plus élevée parmi les multiples dispositifs de source d'horloge candidats, et utilise le dispositif de source d'horloge candidat avec la deuxième priorité la plus élevée en tant que source d'horloge maître.
